Europäisches Patentamt

European Patent Office

Office européen des brevets

(11) Veröffentlichungsnummer: **0 032 977**
**B1**

# (12) EUROPÄISCHE PATENTSCHRIFT

(45) Veröffentlichungstag der Patentschrift:
05.12.84

(51) Int. Cl.³: **C 08 F 36/18**

(21) Anmeldenummer: **80106410.6**

(22) Anmeldetag: **21.10.80**

(54) **Kontinuierliche Polymerisation von Chloropren.**

(30) Priorität: **25.01.80 DE 3002711**

(43) Veröffentlichungstag der Anmeldung:
**05.08.81 Patentblatt 81/31**

(45) Bekanntmachung des Hinweises auf die Patenterteilung:
**05.12.84 Patentblatt 84/49**

(84) Benannte Vertragsstaaten:
**BE DE FR GB IT NL**

(56) Entgegenhaltungen:
**DE - A - 2 008 674
DE - A - 2 527 396
US - A - 2 831 842**

(73) Patentinhaber: **BAYER AG, Konzernverwaltung RP
Patentabteilung, D-5090 Leverkusen 1 Bayerwerk (DE)**

(72) Erfinder: **Musch, Rüdiger, Dr.,
Altenberger-Dom-Strasse 169, D-5060 Bergisch
Gladbach 2 (DE)**
Erfinder: **Göbel, Wilhelm, Dr.,
Max-Beckmann-Strasse 37, D-5090 Leverkusen 1 (DE)**
Erfinder: **Konter, Wolfgang, Dr., Espenstrasse 49,
D-4040 Neuss 21 (DE)**
Erfinder: **Nolte, Wilfried, Dr., Gronenborn C 33,
D-5090 Leverkusen (DE)**

## Beschreibung

Die vorliegende Erfindung betrifft ein Verfahren zur kontinuierlichen ausscheidungsfreien Polymerisation von Chloropren in wässriger Emulsion in Gegenwart geringer Emulgatormengen zu stabilen Latices und zu Festkautschuken mit verbesserten Rohmaterial-Mischungs- und Vulkanisateigenschaften.

Die Polymerisation von Chloropren in wässrigen Emulsion ist seit langem bekannt und wird grosstechnisch durchgeführt (vgl. z.B. Encyclopedia of Polymer Science and Technology, Bd. 3, Seiten 705–730, Interscience, 1965). Dieser radikalisch gesteuerte Polymerisationsprozess verläuft sehr rasch unter starker Wärmeentwicklung. Die schnelle Abführung der Polymerisationswärme ist daher schwierig und setzt ein gut funktionierendes Kühlsystem voraus. Um die hohen Anforderungen, die an das Polymere gestellt werden zu erfüllen, sind zahlreiche Vorschläge in der Patentliteratur erschienen. Schwierigkeiten entstehen jedoch bei der reproduzierbaren Herstellung von Polychloropren mit gleichbleibend hohem Qualitätsniveau. Aus diesen und aus wirtschaftlichen Gründen heraus ist es in der Praxis daher günstig, Chloropren in einer kontinuierlich arbeitenden Polymerisationsanlage zu polymerisieren.

Wie dem Fachmann bekannt sein dürfte, hängen Rohmaterial- und Vulkanisateigenschaften der Polymeren von der Zusammensetzung des Emulgators und seiner Konzentration in der wässrigen Emulsion ab. Ein hoher Emulgatorgehalt erhöht zwar die Polymerisationsgeschwindigkeit und verbessert die Latexstabilität, verschlechtert aber wesentliche Produkteigenschaften und führt z.B. zu einer hohen Walzenklebrigkeit des Rohkautschuks. Es war daher wünschenswert, den Emulgatorgehalt im Ansatz zu senken. Wie bekannt, sinkt jedoch bei verringertem Emulgatorgehalt die Polymerisationsgeschwindigkeit ab. (F. Hölscher, Dispersionen synthetischer Hochpolymerer, Teil I, Eigenschaften, Herstellung und Prüfung, Springer-Verlag, Berlin-Heidelberg-New York, 1969, S. 81 ff.). Bei kontinuierlicher Polymerisation bedeutet dies ein geringerer Monomerumsatz in der Polymerisationsstrasse bei gleicher Verweilzeit.

Der Monomerumsatz lässt sich bei gleicher Polymerisationstemperatur wieder anheben durch eine längere Verweilzeit der Emulsion in der Polymerisationsanlage oder durch höhere Aktivatordosierung, wobei in beiden Fällen Produktverschlechterungen in Kauf genommen werden müssen.

Die mittlere Verweilzeit ($V_z$) des polymerisierenden Chloroprens in der Kesselkaskade ist für einen gleichmässigen und störungsfreien Polymerisationsverlauf und für gleichförmig gute Produkteigenschaften des Polymerisats von grosser Wichtigkeit. Sie wird aus der nachstehenden einfachen Formel ermittelt:

$$V_z = \frac{\Sigma\, V_k}{L}$$

$V_z$ = Verweilzeit [h]
$\Sigma V_k$ = Summe der Kesselvolumina der Polymerisationsstrasse [m³]
L = Latexmenge, die pro Stunde anfällt [m³/h].

Bei einer 7 Kessel-Kaskade liegt $V_z$ üblicherweise bei 2–4 Stunden. Bei langer Verweilzeit der Emulsion in der Konti-Anlage ($V_z > 5$ Stdn.), d.h., bei langsamer Polymerisation bilden sich neben dem gewünschten Chloropren-Polymerisat auch sogenannte Popcorn-Polymerisate. Man versteht darunter hochvernetzte, in organischen Lösungsmitteln unlösliche Produkte. Haben sich solche Popcorn-Keime einmal gebildet, wachsen sie durch Autokatalyse rasch an. In der Folge kommt es zu Verstopfungen in der Polymerisationsanlage, Umsatzüberschreitung und dadurch zu Polymerisaten mit stark schwankenden Produkteigenschaften.

Bei einer zu kurzen Verweilzeit ($V_z < 2$ Std.) dagegen lässt sich die Polymerisationswärme nur schwierig abführen und es entstehen Produkte mit ungünstigen Rohmaterial- und Vulkanisateigenschaften. Die störungsfreie kontinuierliche Polymerisation von Chloropren zu Produkten mit hoher Qualität ist daher nur innerhalb einer bestimmten Verweilzeit möglich.

Diese kontinuierliche Polymerisation von Chloropren ist bekannt und bereits beschrieben worden, z.B. in den US-Patentschriften 2 384 277, 2 394 291 und 2 831 842.

Um bei der kontinuierlichen Polymerisationsweise die gleiche Reaktionsgeschwindigkeit wie beim Batch-Ansatz zu erreichen, muss entweder mehr Emulgator eingesetzt werden, oder wie in der US-PS 2 394 291 beschrieben, wesentlich mehr Aktivatorlösung eindosiert werden. Dies führt jedoch zu Ausscheidungen im Polymerisations- und Entgasungstrakt der Anlage.

Eine störungsfreie kontinuierliche Polymerisation in Gegenwart geringer Emulgatorkonzentrationen ist daher nicht möglich.

Auch die kontinuierliche Polymerisation von Chloropren mit Hilfe eines Emulgatorsystems aus Salzen von disproportionierter Abietinsäure, Fettsäure und nichtionogenen Emulgatoren wie sie in der DE-OS 2 520 339 beschrieben worden ist, führt nicht zum Ziel, da die nichtionogenen Emulgatoren die Polymerisation bremsen und die oben beschriebenen negativen Effekte auftreten.

In den deutschen Offenlegungsschriften 2 047 449 und 2 047 450 werden Verfahren zur Herstellung feststofffreier Polychloropren-Latices beschrieben. Danach wird eine ausreichende kolloidale Stabilität des Latex während der Polymerisation nur dann erreicht, wenn man eine Kombination von 3 Emulgatoren und Dispergiermittel in genau definierten Konzentrationsbereichen einsetzt. Für eine ausreichende Latexstabilität ist es wesentlich, dass neben polymeren Fettsäuren nicht weniger als 1,5–2,0 Gew.-Teile eines Kondensationsproduktes aus Naphthalinsulfonsäure und Formaldehyd pro 100 Gew.-Teile Chloropren und nicht mehr als 1,5 Gew.-Teile einer dispergierten Abietinsäure zugegeben sind. Diese Latices lassen sich jedoch nicht z.B. durch Gefrierkoagulation zum Festkautschuk aufarbeiten.

Produkte, die durch Elektrolytfällung erhalten werden, verfärben sich jedoch stark bei der Trocknung. Es war daher überraschend festzustellen, dass man ohne Zusatz polymerer Fettsäure und in Gegenwart geringer Mengen an Kondensations-produkten aus Naphthalinsulfonsäuren und Form-aldehyd die Latexstabilität während der konti-nuierlichen Polymerisation verbessern, die Lauf-zeit der Polymerisationsstrasse selbst bei geringem Wassergehalt im Ansatz wesentlich verlängern kann und leicht z.B. durch Gefrierkoagulation aufarbeitbare Latices erhält, wenn man die üblicherweise benutzte Natronlauge durch Kalilauge oder Mischungen anderer Alkalilaugen wie z.B. LiOH, KOH, CsOH ersetzt und die Na-Salze der Emulgatoren durch deren Kaliumsalze aus-tauscht. Die Reaktionsgeschwindigkeit der konti-nuierlich ablaufenden Polymerisation von Chloro-pren bei niedriger Emulgatorkonzentration kann durch die Wahl der Mischung verschiedener Alkalihydroxyde und ihrer Konzentration im Ansatz ausreichend gesteuert werden. Man erhält auf diese Weise lagerstabile Latices, die zum Festkautschuk aufgearbeitet Produkte mit wesentlich verbesserten Rohmaterial und Vulkanisateigenschaften, wie z.B. einer geringen Walzenklebrigkeit, geben.

Gegenstand der vorliegenden Erfindung ist somit ein Verfahren zur Herstellung von lagerstabi-lem Polychloropren mit geringer Walzenklebrig-keit durch kontinuierliche Polymerisation von Chloropren und gegebenenfalls bis zu 50 Gew.-% eines mit Chloropren copolymerisierbaren Monomeren in wässriger alkalischer Emulsion in Gegenwart von Emulgatoren und radikalischen Initiatoren bei Temperaturen von 0–70°C und an-schliessender Isolierung, das dadurch gekenn-zeichnet ist, dass bei der Polymerisation 90 bis 150 Gew.-Teile Wasser, als Emulgatoren 2,5–4,0 Gew.-Teile eines Kaliumsalzes der disproportionierten Abietinsäure (bezogen auf Säure) und 0,3–1,0 Gew.-Teile eines Kondensationsproduktes aus Naphthalinsulfonsäure und Formaldehyd, und ferner 0,2–1,5 Gew.-Teile Kaliumhydroxid, alle Angaben bezogen auf 100 Gew.-Teile Monomer, eingesetzt werden.

Vorzugsweise werden 0,4–0,9 Gew.-Teile KOH und 100–130 Gew.-Teile Wasser eingesetzt. Bis zu 60% der Kaliumionen können durch andere Alka-liionen wie z.B. Li $^{\oplus}$, Na $^{\oplus}$ ersetzt werden. Die exakte Konzentration an Kaliumionen ist abhängig von der mittleren Verweilzeit des polymerisierenden Chloroprens in der Kesselkaskade, von der Konzentration an Emulgatoren und vom Wasseranteil im Ansatz, jedoch vom Fachmann leicht zu ermitteln. Das erfindungsgemässe Verfahren lässt sich mit Vorteil sowohl bei der diskontinuierlichen, als auch bei der kontinuierlichen Polymerisation des Chloroprens anwenden, wobei die Vorteile besonders bei der kontinuierlichen Arbeitsweise hervortreten.

Bei der Durchführung des Verfahrens kann Chloropren allein polymerisiert oder bis zu 50% durch eine andere mit Chloropren copolymerisierbare Verbindung ersetzt werden, wie z.B. Monovi-nylverbindungen (Acrylnitril, Methacrylnitril, Vi-nylidenchlorid, α-Chloracrylnitril, Methacrylsäu-reester, Acrylsäureester), vinylsubstituierte aro-matische Verbindungen (Styrol, Vinyltoluole) und konjugierte Dien-Verbindungen (Butadien-(1,3), 1-Chlor-butadien-(1,3), 2,3-Dichlorbutadien-(1,3), 2-Chlor-3-methyl-butadien-(1,3)).

Als weitere Comonomere kommen auch Divinylverbindungen wie Diester aus aliphatischen Dialkoholen und ethylenisch ungesättigten Monocarbonsäuren (z.B. Ethylenglykoldimethacrylat, Ethylenglykoldiacrylat) oder Schwefel in Frage.

Die Polymerisation wird in wässrig-alkalischer Emulsion in Anwesenheit radikalischer Initiatoren durchgeführt. Als geeignete Emulgatorsysteme werden Kaliumsalze wasserlöslicher gesättigter oder ungesättigter Monocarbonsäuren eingesetzt, z.B. disproportionierte Resinsäuren, gegebenenfalls im Gemisch mit Fettsäuren wie Ölsäure, Kokosfettsäuren. Die Emulgatoren werden im allgemeinen in Mengen von 2,5–4,0 Gew.-Teilen (bevorzugt 2,8–3,3 Gew.-Teilen), bezogen auf 100 Gew.-Teile Monomer zugesetzt.

Auch Kondensationsprodukte aus Naphthalinsulfonsäure und Formaldehyd werden als zusätzliche Emulgatoren eingesetzt. Hier hat es sich gezeigt, dass es günstig ist, 0,4–0,8 Gew.-Teile dieser oberflächenaktiven Verbindungen pro 100 Gew.-Teile Monomer zuzusetzen. Die Latexstabilität kann ausserdem gerade bei niedrigen Wasseranteilen im Ansatz durch Zugabe von Na-Hexametaphosphat (0,1–0,5 Gew.-Teile pro 100 Gew.-Teile Monomer) zusätzlich erhöht werden.

Zur Regelung des Molekulargewichtes werden Kettenüberträger wie Alkylmercaptane oder Dialkylxanthogendisulfide zugesetzt. Der Anteil des eingesetzten Mercaptans, z.B. Dodecylmercaptan, beeinflusst das Molekulargewicht des entstehenden Polymeren. Mit steigendem Anteil an Mercaptan verringert sich das mittlere Molekulargewicht des Polymeren, sichtbar an der sinkenden Mooney-Viskosität der Produkte.

Das Reaktionsprodukt besitzt einen für die Weiterverarbeitung günstigen Mooney-Bereich, wenn das Mercaptan in Mengen von 0,1–0,3 Gew.-Teilen pro 100 Gew.-Teile Monomer zugesetzt wird.

Die zur Erreichung einer gewünschten Polymerviskosität nötigen Mengen an Kettenüberträgern lassen sich vom Fachmann leicht ermitteln.

Verwendet man das erfindungsgemässe Emulgatorsystem, ist ein pH-Wert der Emulsion grösser als 10 erforderlich. Er sollte vorzugsweise bei pH 11–13,5 liegen.

Die Polymerisation wird durch Zugabe bekannter Polymerisationsinitiatoren gestartet und durchgeführt. Als Initiatoren kommen Radikale erzeugende Verbindungen in Frage, wie z.B.: Alkalipersulfate, Wasserstoffperoxyd und organische Peroxyde wie Cumolhydroperoxyd oder Benzoylperoxyd. Es ist ferner möglich, die Polymerisation durch Zugabe von Reduktionsmitteln, wie Form-amidinsulfinsäure zu initiieren. Die Temperatur-führung während der Polymerisation kann zwi-

schen 0 und 70 °C variieren, wobei sich der Bereich von 30–50 °C als günstig erwiesen hat. Der Monomerumsatz sollte 85% nicht überschreiten, er liegt bei benzollöslichen Polymerisaten üblicherweise bei 68–85%, bei benzolunlöslichen vernetzten Polymeren bei 75–85%. Inhibitoren wie Phenothiazin beenden die Polymerisation. Das restliche nicht umgesetzte Monomere kann durch Wasserdampfdestillation entfernt werden. Der pH des alkalischen Latex wird durch verdünnte Essigsäure auf pH 5–7, vorzugsweise auf pH 6,0–6,5 gesenkt und das Polymere aus dieser Emulsion beispielsweise durch Gefrierkoagulation isoliert und getrocknet, wie z.B. beschrieben in: Chem. Engng. Progr. 43, 391 (1974) und in der deutschen Patentschrift 1 051 506. Für die Aufarbeitung eignen sich aber auch andere herkömmliche Methoden, wie z.B. im deutschen Patent 1 111 804 beschrieben.

Die folgenden Beispiele erläutern die Erfindung:

Beispiel 1 (Vergleichsbeispiel)

In den ersten Reaktor einer Polymerisationskaskade, bestehend aus 7 gleichen Reaktoren mit einem Volumen von je 50 Liter werden die wässrige Phase (W) und die Monomerphase (M) über eine Mess- und Regelapparatur in stets konstantem Verhältnis sowie die Aktivatorphase (A) eingefahren. Die mittlere Verweilzeit je Kessel beträgt 25 Minuten. (Es wurden Reaktoren verwendet wie in DOS 2 650 714 beschrieben).

(M) = Monomerphase:

| | | |
|---|---|---|
| Chloropren | 95,0 | Gew.-Teile |
| 2,3-Dichlorbutadien-(1,3) | 5,0 | Gew.-Teile |
| n-Dodecylmercaptan | 0,22 | Gew.-Teile |
| Phenothiazin | 0,015 | Gew.-Teile |

(W) = wässrige Phase:

| | | |
|---|---|---|
| Entsalztes Wasser | 130,0 | Gew.-Teile |
| Natriumsalz einer disproportionierten Abietinsäure | 4,0 | Gew.-Teile |
| Natriumsalz eines Kondensationsproduktes aus Naphthalinsulfonsäure und Formaldehyd | 0,7 | Gew.-Teile |
| Ätznatron | 0,63 | Gew.-Teile |

(A) = Aktivatorphase:

| | | |
|---|---|---|
| 1 gew.-%ige wässrige Formamidinsulfinsäurelösung | 0,05 | Gew.-Teile |

Bei einer Innentemperatur von 40 °C springt die Reaktion leicht an. Durch eine Aussenkühlung wird die freiwerdende Polymerisationswärme abgeführt und die Polymerisationstemperatur auf +45 °C gehalten. Bei einem Monomerumsatz von 66% wird die Reaktion durch Zugabe von Phenothiazin abgebrochen. Das restliche Monomere wird durch Wasserdampfdestillation aus dem Polymeren entfernt und der Polymerlatex nach Senken des pH-Wertes auf 7,0 auf einer Kühlwalze ausgefroren und isoliert. Die Mooney-Viskosität des Polymeren liegt bei ML-4′ = 45 ME.

Nach einer Polymerisationszeit von 120 Stunden wird die Polymerisationsstrasse ausgefahren.

In den Reaktoren hat sich in diesem Zeitraum 6 kg an polymeren Ausscheidungen angesammelt.

Beispiel 2

Verringerung der Emulgatorkonzentration (Vergleichsbeispiel)

Es wird wie im Vergleichsbeispiel 1 polymerisiert, jedoch mit einer wässrigen Phase, die statt 4,0 Teile jetzt 2,8 Teile eines Na-Salzes einer disproportionierten Abietinsäure enthält. Die Polymerisation verläuft nur schleppend und der angestrebte Monomerumsatz von 65% kann selbst durch eine wesentlich höhere Aktivatordosierung (vgl. Tab. 1) nur auf 48% gesteigert werden. Nach einer Laufzeit von 26 Stunden muss die Polymerisation abgebrochen werden, da das Rohrleitungssystem zwischen den Kesseln durch Ausscheidungen verstopft ist. Es wurden 28 kg an Koagulat aus der Anlage entfernt.

Beispiel 3

Verlängerung der mittleren Verweilzeit (Vergleichsbeispiel)

Man verfährt wie im Beispiel 2, erhöht jedoch die mittlere Verweilzeit des Latex pro Kessel von 25 min auf 40 min. Mit dieser Massnahme wird zwar bei geringerem Aktivatorverbrauch der Endumsatz von 65% erreicht, jedoch treten schon nach einer Laufzeit von 19 Stunden die ersten schmierigen Ausscheidungen auf, die derart zunehmen, dass die Reaktion nach 46 Stunden abgebrochen werden muss. Das Produkt hat eine Mooney-Viskosität von ML-4′ = 46 ME.

Beispiel 4

Geringerer Wasseranteil im Ansatz (Vergleichsversuch)

Es wird wie im Beispiel 1 verfahren, nur enthält die wässrige Phase statt 130 Teile Wasser jetzt 110 Teile. Die Polymerisation wird nach 40 Stunden abgebrochen. In den Kesseln hat sich 7 kg an polymeren Ausscheidungen angesammelt. Im Latex bilden sich nach einer Lagerzeit von 3 Tagen die ersten Ausscheidungen. Der pH-Wert des Latex kann nicht für die Aufarbeitung auf pH 7,0 gesenkt werden, da das Polymere schon bei pH 7,2 koaguliert und ausfällt. Die Isolierung erfolgt daher bei pH 7,5. Das getrocknete Polymere hat eine Mooney-Viskosität von ML-4′ = 44 ME.

Beispiel 5

Geringere Wasser- und Emulgatorkonzentration im Ansatz (Vergleichsbeispiel)

Man verfährt wie im Beispiel 2, verringert jedoch zusätzlich den Wasseranteil auf 110 Teile. Der Monomerumsatz liegt trotz hohem Aktivatorverbrauch nur bei 40%. Die Polymerisation wird nach 16 Stunden abgebrochen, die Ausscheidungen in den Kesseln betragen 21 kg.

Beispiel 6

KOH als Alkalikomponente

Man verfährt wie im Beispiel 1 und ersetzt nur in der wässrigen Phase (W) die Natronlauge durch äquimolare Mengen an Kalilauge. Die Polymerisation läuft bei geringerem Aktivatorverbrauch gleichmässiger und die Reaktoren enthalten nach einer Polymerisationszeit von 120 Stunden keine Ausscheidungen. Die Mooney-Viskosität des Polymeren liegt bei ML-4' = 47 ME.

Beispiel 7
Verringerung der Emulgatorkonzentration

Man verfährt wie im Beispiel 2 und ersetzt die Natronlauge durch äquimolare Mengen an Kalilauge. Der Monomerumsatz von 65% wird bei niedrigem Aktivatorverbrauch erreicht. Die Reaktoren enthalten nach einer Polymerisationszeit von 120 Stunden keine Ausscheidungen. Die Mooney-Viskosität des Polymeren liegt bei ML-4' = 45 ME.

Beispiel 8
Verringerung des Wasseranteils im Ansatz

Man verfährt wie im Beispiel 4 und ersetzt die Natronlauge durch äquimolare Mengen an Kalilauge. Die Reaktoren enthalten nach einer Polymerisationszeit von 120 Stunden 1 kg Ausscheidungen. Die Mooney-Viskosität des Polymeren liegt bei ML-4' = 43 ME.

Beispiel 9
Geringere Wasser- und Emulgatorkonzentration im Ansatz

Man verfährt wie im Beispiel 5 und ersetzt Natronlauge durch äquimolare Mengen an Kalilauge. Die Reaktoren enthalten nach einer Polymerisationszeit von 120 Stunden 2 kg Ausscheidungen. Der Latex ist lagerstabil und kann bei pH 7 auf das Kühlwalze ausgefroren und isoliert werden. Das koagulierte Polymere ist elastisch und lässt sich leicht trocknen. Die Mooney-Viskosität des Polymeren liegt bei ML-4' = 46 ME.

| Beispiel | Wasser im Ansatz (Gew.-Teile) | Emulgator[1] (Gew.-Teile) | $Na^{\oplus 2}$ $(10^{-2})$ | $K^{\oplus 2}$ $(10^{-2})$ | Aktivator-[3] Verbrauch in den Reaktionsgef. 1 | 2–7 | Monomer-Umsatz (%) |
|---|---|---|---|---|---|---|---|
| 1 | 130 | 4,0 | 3,10 | 0 | 0,04 | 0,01 | 66 |
| 2 | 130 | 2,8 | 2,72 | 0 | 0,10 | 0,07 | 48 |
| 3[4] | 130 | 2,8 | 2,72 | 0 | 0,05 | 0,02 | 65 |
| 4 | 110 | 4,0 | 3,10 | 0 | 0,04 | 0,04 | 65 |
| 5 | 110 | 2,8 | 2,72 | 0 | 0,11 | 0,03 | 40 |
| 6 | 130 | 4,0 | 1,50 | 1,60 | 0,010 | 0,018 | 65 |
| 7 | 130 | 2,8 | 1,12 | 1,60 | 0,010 | 0,008 | 65 |
| 8 | 110 | 4,0 | 1,50 | 1,60 | 0,008 | 0,002 | 65 |
| 9 | 110 | 2,8 | 1,12 | 1,60 | 0,010 | 0,001 | 65 |

[1] Na-Salz der disproportionierten Abietinsäure
[2] Angabe in Mol/100 Teile Monomer
[3] 1 gew.-%ige wässrige Formamidinsulfinsäure
[4] Verweilzeit 280 Minuten

Wie in den Beispielen 1–5 gezeigt wird, führt in Abwesenheit von $K^{\oplus}$-Ionen sowohl eine Verringerung der Emulgatorkonzentration (Beispiel 2) als auch ein geringerer Wasseranteil in Ansatz (Beispiel 4) oder beides (Beispiel 5) zu starken Ausscheidungen in den Polymerisationskesseln und zu einem frühzeitigen Abbruch der kontinuierlichen Polymerisation. Der angestrebte Monomerumsatz wird kaum oder gar nicht erreicht. Schon ein teilweiser Ersatz der $Na^{\oplus}$ durch $K^{\oplus}$-Ionen (Beispiel 6–9) behebt diese Schwierigkeiten. Man erhält lagerstabile Latices, die sich problemlos aufarbeiten lassen.

Beispiel 10
(Vernetztes Polychloropren, Vergleichsbeispiel)

Man verfährt wie im Beispiel 1 beschrieben, indem man die folgenden 3 Phasen eindosiert:

(M) = Monomerphase:
| | | |
|---|---|---|
| Chloropren | 90,0 | Gew.-Teile |
| Ethylenglykoldimethacrylat | 10,0 | Gew.-Teile |
| n-Dodecylmercaptan | 0,4 | Gew.-Teile |
| Phenothiazin | 0,015 | Gew.-Teile |

(W) = wässrige Phase:
| | | |
|---|---|---|
| Entsalztes Wasser | 130,0 | Gew.-Teile |
| Natriumsalz einer disproportionierten Abietinsäure | 4,0 | Gew.-Teile |
| Natriumsalz eines Kondensationsproduktes aus Naphthalinsulfonsäure und Formaldehyd | 0,7 | Gew.-Teile |

(A) = Aktivatorphase:
| | | |
|---|---|---|
| 1 gew.-%ige wässrige Formamidinsulfinsäurelösung $\approx$ | 0,05 | Gew.-Teile |

Bei einem Monomerumsatz von 80% wird die Reaktion durch Zugabe von Phenothiazin abgebrochen. Das restliche Monomere wird durch Wasserdampfdestillation aus dem Polymeren entfernt. Der Polymerlatex beginnt schon nach 24 Stunden zu agglomerieren und fällt nach 3 Tagen aus.

Beispiel 11 (Vernetztes Polychloropren)

Man verfährt wie im Beispiel 10 beschrieben, setzt jedoch eine andere wässrige Phase ein.

(W) = wässrige Phase:

| | |
|---|---|
| Entsalztes Wasser | 130,0 Gew.-Teile |
| Kaliumsalz einer dispropor-tionierten Abietinsäure | 3,0 Gew.-Teile |
| Kaliumsalz eines Konden-sationsproduktes aus Naph-thalinsulfonsäure und Form-aldehyd | 0,7 Gew.-Teile |
| Kaliumhydroxyd | 0,42 Gew.-Teile |

Der Polymerlatex ist lagerstabil und zeigt nach einer Lagerzeit von 1 Woche noch keine Ausscheidungen.

Beispiel 12 (Vergleichsbeispiel)

Man verfährt wie im Beispiel 1 beschrieben, ersetzt jedoch die 5 Gew.-Teile 2,3-Dichlorbutadien (1,3) durch die gleichen Mengen an Chloropren. Die Mooney-Viskosität des Polymeren liegt bei ML-4' = 46 ME.

Beispiel 13

Man verfährt wie im Beispiel 7 beschrieben, ersetzt jedoch das Comonomere 2,3-Dichlorbutadien (1,3) durch gleiche Gew.-Teile an Chloropren.

Die Mooney-Viskosität des Polymeren liegt bei ML-4' = 47 ME.

Beispiele 14 und 15
Walzenklebrigkeit/Kalandertest

Die verminderte Walzenklebrigkeit der erfindungsgemässen Polymeren wird durch einen praxisnahen Test belegt. In einem Laborkneter werden innerhalb von 4 min die nachstehenden Substanzen zunächst gemischt:

| | |
|---|---|
| Polymer | 100 Gew.-Teile |
| Russ N-472 | 30 Gew.-Teile |
| aromat. Mineralöl | 15 Gew.-Teile |
| Phenyl-α-Naphthylamin | 1 Gew.-Teil |
| Stearinsäure | 0,5 Gew.-Teile |
| Magnesiumoxid | 4 Gew.-Teile |
| Zinkoxid | 5 Gew.-Teile |

Nach einer Lagerungszeit von ca. 24 Stunden bei RT wird die Mischung auf einem Walzwerk auf ca. 50–55 °C vorgewärmt und dann auf einem Dreiwalzenlaborkalander (Walzenlänge 400 mm; Walzendurchmesser 200 mm) mit Friktionen von 1 : 1,31 zwischen der 1. und 2. Walze und 1 : 1 zwischen der 2. und 3. Walze zu einem Band von 0,5 mm Dicke ausgezogen.

Beurteilung des gesamten Vorganges:

Zahl: Beurteilung der Klebrigkeit;

1 = Fell klebt nicht
   (wird von der schnelleren Walze nicht mitgenommen)
2 = Fell klebt etwas
   (wird von der schnelleren Walze etwas mitgenommen)

3 = Fell klebt etwas
   (wird von der schnelleren Walze mitgenommen)
4 = Fell klebt stark
   (kann nur mit Mühe abgezogen werden)

| Ein-stellung | Temperatur der Walzen (°C) | | | Beispiel 14 Polymer aus B. | | Beispiel 15 Polymer aus B. | |
|---|---|---|---|---|---|---|---|
| | 1 | 2 | 3 | 7 | 1 (Vergl.) | 13 | 12 (Vergl.) |
| A | 35 | 40 | 50 | 2 | 4 | 1–2 | 3 |
| B | 40 | 45 | 55 | 2–3 | 4 | 2 | 4 |
| C | 43 | 52 | 60 | 3 | —[1] | 2–3 | 4 |

[1] nicht mehr messbar

Daran ist zu ersehen, dass die Walzenklebrigkeit bei den erfindungsgemässen Polymeren (Beispiele 7, 13) sehr viel geringer ist, als bei den herkömmlichen, somit ein wesentlicher Faktor des gesamten Verarbeitungsverhaltens deutlich verbessert wurde.

Beispiele 16, 17 (Vulkanisationsverhalten) Eine Russmischung gemäss ISO 2475 wird in einem Bayer-Frank-Vulkameter bei 130, 140 und 150 °C auf ihr Vulkanisationsverhalten untersucht (nach DIN 53 529):

| Temperatur | | 130 °C $t_s$ | 150 °C $t_{10}$ | $t_{80}$ |
|---|---|---|---|---|
| Beisp. | Polymere aus | min. | min. | |
| 16 | Beisp. 7 | 16 | 4 | 17 |
| | Beisp. 1 (Vergl.) | 14 | 3 | 20 |
| 17 | Beisp. 13 | 14 | 4 | 15 |
| | Beisp. 12 (Vergl.) | 11 | 3 | 17 |

Daraus lässt sich ein beachtlicher technologischer Vorteil für das erfindungsgemässe Polymerengemisch ableiten, da einer verzögerten Anvulkanisation eine schnellere Ausvulkanisation folgt. Diese führt dann auch zu einer vorteilhaften höheren Vernetzungsdichte der Vulkanisate.

Beispiel 18 (Vulkanisatprüfung)

Prüfung der erfindungsgemäss hergestellten Polychloroprenkautschuke:

Standardprüfung nach ISO-Vorschrift 2475-1975 (E).

Vulkanisateigenschaften:

Vulkanisationstemperatur: 150 °C
Heizzeiten: 20, 40 und 60 min (Ring I)
Prüfung: F, D, S 100/300% (DIN 53 504); Mittelwerte aus drei Heizstufen
H 20/70 °C (DIN 53 505)
E (DIN 53 512)
F = Festigkeit; D = Dehnung; S = Spannungswert; H = Härte;
E = Elastizität

Polymerprüfung. Vulkanisateigenschaften (150 °C)

| Polymer aus Beispiel: | F (MPa) | D (%) | S 300% (MPa) | H 20/70° (Shore A) | E (%) |
|---|---|---|---|---|---|
| 7 | 18,1 | 446 | 10,4 | 64 | 50 |
| 1 (Vergl.) | 17,9 | 430 | 9,2 | 61 | 43 |
| 13 | 19,5 | 460 | 10,2 | 63 | 53 |
| 12 (Vergl.) | 18,3 | 450 | 9,1 | 60 | 49 |

Entsprechend der schnelleren Ausvulkanisation zeigen die Vulkanisate mit den erfindungsgemässen Polymeren (Beispiele 7, 13) eine höhere Vernetzungsdichte, erkenntlich an den auffallend höheren Spannungs(S)-, Härte(H)- und Elastizitäts(E)-Werten. Auch die Festigkeiten (F) und Dehnungen (D) sind angehoben.

**Patentansprüche**

1. Verfahren zur Herstellung von lagerstabilem Polychloropren mit geringer Walzenklebrigkeit durch kontinuierliche Polymerisation von Chloropren und gegebenenfalls bis zu 50 Gew.-% eines mit Chloropren copolymerisierbaren Monomeren in wässriger alkalischer Emulsion in Gegenwart von Emulgatoren und radikalischen Initiatoren bei Temperaturen von 0–70 °C und anschliessender Isolierung, dadurch gekennzeichnet, dass bei der Polymerisation 90 bis 150 Gew.-Teile Wasser, als Emulgatoren 2,5–4,0 Gew.-Teile eines Kaliumsalzes der disproportionierten Abietinsäure (bezogen auf Säure) und 0,3–1,0 Gew.-Teile eines Kondensationsproduktes aus Naphthalinsulfonsäure und Formaldehyd, und ferner 0,2–1,5 Gew.-Teile Kaliumhydroxid, alle Angaben bezogen auf 100 Gew.-Teile Monomer, eingesetzt werden.

2. Verfahren nach Anspruch 1, dadurch gekennzeichnet, dass in Abhängigkeit von der mittleren Verweilzeit des Latex in der Polymerisationsanlage bis zu 60 Gew.-% der Kaliumionen durch andere Alkaliionen ersetzt sind.

3. Verfahren nach Ansprüchen 1 und 2, dadurch gekennzeichnet, dass die Alkalisalze der disproportionierten Abietinsäure in Mengen von 2,8 bis 3,3 Gew.-Teile je 100 Gew.-Teile Monomer zugegeben werden.

4. Verfahren nach Ansprüchen 1 und 2, dadurch gekennzeichnet, dass das Kondensationsprodukt aus Naphthalinsulfonsäure und Formaldehyd in Mengen von 0,4 bis 0,8 Gew.-Teilen je 100 Gew.-Teile Monomer zugegeben wird.

5. Verfahren nach Ansprüchen 1 und 2, dadurch gekennzeichnet, dass 0,4–0,9 Gew.-Teile Kaliumhydroxid je 100 Gew.-Teile Monomer zugegeben wird.

6. Verfahren nach Ansprüchen 1 und 2, dadurch gekennzeichnet, dass 100–130 Gew.-Teile Wasser je 100 Gew.-Teile Monomer zugegeben wird.

7. Verfahren nach Ansprüchen 1 bis 6, dadurch gekennzeichnet, dass man bei Temperaturen von 30–50 °C polymerisiert.

8. Verfahren nach Ansprüchen 1 bis 7, dadurch gekennzeichnet, dass man den Polymerlatex bei pH-Werten von 5–7 aufarbeitet.

9. Verfahren nach Ansprüchen 1 bis 7, dadurch gekennzeichnet, dass man den Polymerlatex bei pH-Werten von 6,0–6,5 aufarbeitet.

**Claims**

1. Process for the production of storage-stable polychloroprene having a low tendency to stick to rollers, by the continuous polymerisation of chloroprene and, optionally, up to 50% by weight of a monomer which is copolymerisable with chloroprene, in aqueous alkaline emulsion in the presence of emulsifiers and radical initiators, at temperatures of 0–70 °C, followed by isolation, characterised in that 90 to 150 parts by weight water, 2.5–4.0 parts by weight of a potassium salt of disproportionated abietic acid (based on acid), as the emulsifiers, and 0.3–1.0 parts by weight of a condensation product of naphthalene sulphonic acid and formaldehyde, and, in addition, 0.2–1.5 parts by weight of potassium hydroxide, are used in the polymerisation, all quantities being based on 100 parts by weight of monomer.

2. Process according to Claim 1, characterised in that depending on the average residence time of the latex in the polymerisation plant up to 60% by weight of the potassium ions are replaced by other alkali metal ions.

3. Process according to Claims 1 and 2, characterised in that the alkali metal salts of disproportionated abietic acid are added in quantities of 2.8 to 3.3 parts by weight per 100 parts by weight of monomer.

4. Process according to Claims 1 and 2, characterised in that the condensation product of naphthalene sulphonic acid and formaldehyde is added in quantities of 0.4 to 0.8 parts by weight per 100 parts by weight of monomer.

5. Process according to Claims 1 and 2, characterised in that 0.4–0.9 parts by weight of potassium hydroxide is added per 100 parts by weight of monomer.

6. Process according to Claims 1 and 2, characterised in that 100–130 parts by weight of water are added per 100 parts by weight of monomer.

7. Process according to Claims 1 to 6, characterised in that the polymerisation is carried out at temperatures of 30–50 °C.

8. Process according to Claims 1 to 7, characterised in that the polymer latex is worked up at pH values of 5–7.

9. Process according to Claims 1 to 7, characterised in that the polymer latex is worked up at pH values of 6.0–6.5.

## Revendications

1. Procédé de préparation d'un polychloroprène stable à la conservation, collant peu sur cylindres, par polymérisation continue du chloroprène et le cas échéant jusqu'à 50% en poids d'un monomère copolymérisable avec le chloroprène en émulsion aqueuse alcaline en présence d'agents émulsionnants et d'inducteurs radicalaires à des températures de 0 à 70 °C et isolement subséquent, caractérisé en ce que l'on utilise à la polymérisation de 90 à 150 parties en poids d'eau, en tant qu'agents émulsionnants 2,5 à 4,0 parties en poids d'un sel de potassium d'un acide abiétique dismuté (exprimé en acide) et 0,3 à 1,0 partie en poids d'un produit de condensation de l'acide naphtalènesulfonique et du formaldéhyde, et en outre 0,2 à 1,5 parties en poids d'hydroxyde de potassium, toutes ces indications se rapportant à 100 parties en poids de monomère.

2. Procédé selon la revendication 1, caractérisé en ce que, en fonction de la durée de passage moyenne du latex dans l'installation de polymérisation, on remplace jusqu'à 60% en poids des ions potassium par d'autres ions alcalins.

3. Procédé selon les revendications 1 et 2, caractérisé en ce que les sels alcalins de l'acide abiétique dismuté sont ajoutés en quantités de 2,8 à 3,3 parties en poids pour 100 parties en poids du monomère.

4. Procédé selon les revendications 1 et 2, caractérisé en ce que le produit de condensation d'un acide naphtalènesulfonique et du formaldéhyde est ajouté en quantités de 0,4 à 0,8 partie en poids pour 100 parties en poids de monomère.

5. Procédé selon les revendications 1 et 2, caractérisé en ce que l'on ajoute de 0,4 à 0,9 partie en poids d'hydroxyde de potassium pour 100 parties en poids de monomère.

6. Procédé selon les revendications 1 et 2, caractérisé en ce que l'on ajoute de 100 à 130 parties en poids d'eau pour 100 parties en poids de monomère.

7. Procédé selon les revendications 1 à 6, caractérisé en ce que l'on polymérise à des températures de 30 à 50 °C.

8. Procédé selon les revendications 1 à 7, caractérisé en ce que l'on traite le latex de polymère à des pH de 5 à 7.

9. Procédé selon les revendications 1 à 7, caractérisé en ce que l'on traite le latex de polymère à des pH de 6,0 à 6,5.